# EUROPÄISCHE PATENTSCHRIFT

(11) **EP 3 254 356 B1**
(45) Veröffentlichungstag und Bekanntmachung des Hinweises auf die Patenterteilung: **19.12.2018**
(21) Anmeldenummer: 16709314.5
(22) Anmeldetag: 04.03.2016
(51) Int. Cl.: H02K 1/18, H02K 1/20, H02K 5/20, H02K 9/19, B02C 23/00

(54) **KÜHLUNG EINER ELEKTRISCHEN MASCHINE**
COOLING OF AN ELECTRIC MACHINE
REFROIDISSEMENT D'UNE MACHINE ÉLECTRIQUE

(30) Priorität: 09.04.2015 EP 15163032
(43) Veröffentlichungstag der Anmeldung: 13.12.2017
(73) Patentinhaber: Siemens Aktiengesellschaft, 80333 München (DE)
(72) Erfinder: ROGGINGER, Christoph, 84384 Wittibreut (DE); WINKLER, Günther, 4785 Haibach (AT)
(86) Internationale Anmeldenummer: PCT/EP2016/054631
(87) Internationale Veröffentlichungsnummer: WO 2016/162150

(56) Entgegenhaltungen:
- EP-A1- 0 118 802
- EP-A2- 0 899 856
- WO-A1-2007/147187
- WO-A2-2012/003208
- DE-A1- 10 019 914
- DE-A1-102009 053 980
- US-A1- 2008 284 263

## Beschreibung

Die Erfindung betrifft eine elektrische Maschine mit einem Statorblechpaket mit einer Statorblechpaketoberfläche. Das Statorblechpaket weist eine Statorwicklung mit einem Wicklungsüberhang auf, welcher an einer Stirnseite des Statorblechpakets in einen Wickelkopfraum hineinragt. Zudem weist die elektrische Maschine ein Gehäuse auf, welches das Statorblechpaket und den Wicklungsüberhang umgibt. Zu der Erfindung gehört auch ein Verfahren zum Kühlen einer elektrischen Maschine.

Bei der Umwandlung von elektrischer Energie in mechanische Energie in Elektromotoren entstehen Verluste in Form von Wärme. Diese Wärmeverluste müssen abgeführt werden, um eine Überhitzung oder eine Beschädigung der Maschine zu verhindern. Zudem kann die Abfuhr der Wärme zu einem besseren Wirkungsgrad führen.

Bei Statorblechpaketen von elektrischen Maschinen größerer Baugröße ist das Verhältnis von elektrisch und elektromagnetisch aktivem Material, das heißt das Material, welches eine Verlustwärme erzeugt, zur Statorblechpaketoberfläche sehr groß. Aus diesem Grund ist es schwierig, die Verlustwärme effektiv von der Oberfläche der Statorblechpakete abzuleiten beziehungsweise abzuführen.

In der DE 10 2009 053 980 A1 ist eine elektrische Maschine mit einem Stator und einem Statorträger beschrieben. Der Statorträger umfasst zumindest ein erstes und ein zweites Statorträgerteil, wobei das erste und das zweite Statorträgerteil an dem Stator angeordnet sind. Die beiden Statorträgerteile sind in einem axialen Abstand zueinander angeordnet. Zwischen dem Stator und den Statorträgerteilen ist ein Kanal ausgebildet, der den Stator in Umfangsrichtung umläuft. Der Kanal wird dabei zur Führung eines Kühlmittels genutzt. Das Kühlmittel wird dem Kanal radial von außen zugeführt und auch wieder radial nach außen abgeleitet.

Aus der DE 100 19 914 A1 geht eine gekühlte elektrische Maschine für Kraftfahrzeuge hervor. Die elektrische Maschine umfasst ein Gehäuse und einen Stator, der mit dem Gehäuse über wenigstens einen Schwingungsdämpfer gekoppelt ist. Das Gehäuse umhüllt den Stator derart, dass durch das Gehäuse eine Umhüllung gebildet wird, welche für die Zirkulation eines Kühlmittels genutzt wird.

Die Aufgabe der Erfindung besteht darin, die Entwärmung einer elektrischen Maschine zu verbessern.

Diese Aufgabe wird erfindungsgemäß durch die Gegenstände der unabhängigen Patentansprüche gelöst. Vorteilhafte Weiterbildungen der Erfindung ergeben sich durch die Merkmale der abhängigen Patentansprüche.

Erfindungsgemäß wird diese Aufgabe gelöst durch eine elektrische Maschine mit einem Statorblechpaket mit einer Statorblechpaketoberfläche, wobei das Statorblechpaket eine Statorwicklung mit einem Wicklungsüberhang, einen sogenannten Wickelkopf, aufweist. Mit Statorblechpaketoberfläche ist die Mantelfläche des z.B. zylindrischen Statorblechpakets gemeint. Der Wicklungsüberhang ragt dabei an einer Stirnseite des Statorblechpakets in einen Wickelkopfraum hinein. Zudem umfasst die elektrische Maschine ein Gehäuse, welches das Statorblechpaket und den Wicklungsüberhang umgibt. Zwischen dem Gehäuse und dem Statorblechpaket beziehungsweise der Statorblechpaketoberfläche sind ein erster und ein zweiter Statorpaketaufnahmering an der Statorblechpaketoberfläche angeordnet. Der erste und der zweite Statorpaketaufnahmering sind in einem vorbestimmten Abstand axial zueinander angeordnet und umgeben das Statorblechpaket radial. Da die Statorpaketaufnahmeringe zwischen dem Statorblechpaket und dem Gehäuse angeordnet sind, können diese auch als Statorpaketsitze bezeichnet werden.

Durch die entsprechende Anordnung des Gehäuses, der Statorblechpaketoberfläche, dem ersten Statorpaketaufnahmering und dem zweiten Statorpaketaufnahmering ist zwischen dem Gehäuse, der Statorblechpaketoberfläche, dem ersten und dem zweiten Statorpaketaufnahmering ein Hohlraum gebildet. Dieser Hohlraum ist durch die beidseitig angebrachten Statorpaketaufnahmeringe vom restlichen Gehäusevolumen abgetrennt. Neben der Abdichtung beziehungsweise Abgrenzung des Hohlraums durch die Statorpaketaufnahmeringe können diese ferner zur Drehmomentübertragung ausgebildet sein. Somit kann den Statorpaketaufnahmeringen eine Doppelfunktion zugeordnet werden. Zum einen die zur Abgrenzung oder Abdichtung des Hohlraums und zum anderen zur Drehmomentübertragung.

Erfindungsgemäß weist das Gehäuse mindestens eine Zulaufbohrung zwischen dem ersten Statorpaketaufnahmering und dem zweiten Statorpaketaufnahmering auf, wobei die Zulaufbohrung einen Außenbereich des Gehäuses der elektrischen Maschine und den Hohlraum fluidisch koppelt. Mit "fluidisch gekoppelt" ist hier gemeint, dass die Zulaufbohrung als Durchgangskanal für ein Fluid ausgebildet ist und somit das Fluid von einem Außenbereich des Gehäuses über die Zulaufbohrung in den Hohlraum der elektrischen Maschine gelangt. Das Fluid kann beispielsweise ein flüssiges oder gasförmiges Kühlmittel sein. Bevorzugt kann die Zulaufbohrung mittig oder zentrisch zwischen dem ersten und dem zweiten Statorpaketaufnahmering. Ferner kann die Zulaufbohrung zentrisch zur Statorblechpaketoberfläche, d.h. zwischen einer ersten Stirnfläche des Statorblechpakets und einer axial gegenüberliegenden zweiten Stirnfläche des Statorblechpakets, angeordnet sein. In vorteilhafter Weise können in Umfangsrichtung des Gehäuses über den Umfang des Gehäuses verteilt mehrere Zulaufbohrungen in einem vorbestimmten Abstand zueinander vorgesehen sein. Daraus ergibt sich eine einfache Anordnung einer elektrischen Maschine mit integriertem Hohlraum.

Erfindungsgemäß weist das Statorblechpaket einen Kühlkanal auf, welcher über einen Kanaleingang fluidisch mit dem Hohlraum gekoppelt ist. Dabei ist der Kanaleingang zentrisch in der Mitte des Statorblechpakets angeordnet, sodass sich eine T-Form des Kühlkanals in Verbindung mit dem Kanaleingang ergibt, wodurch sich ein Kühlmittelstrom nicht über eine gesamte Länge des Statorblechpakets erwärmt, sondern nur über die kürzere Strecke, die sich durch die T-Form ergibt. Dadurch kann das vom Hohlraum kommende Kühlmittel durch den Kühlkanal des Statorblechpakets in axiale Richtung umgelenkt und axial durch den Kühlkanal geleitet werden. Dadurch ergibt sich der Vorteil, dass der im Statorblechpaket liegende Kühlkanal ohne großen Fertigungsaufwand mit einem Kühlmittel gespeist werden kann.

Durch die Anordnung der oben beschriebenen Komponenten der elektrischen Maschine ergibt sich folgendes Verfahren zum Kühlen der elektrischen Maschine. Erfindungsgemäß wird ein Kühlmittel radial durch die mindestens eine Zulaufbohrung des Gehäuses von einem Außenbereich des Gehäuses in den Hohlraum gefördert. Durch den durch die Statorpaketaufnahmeringe, das heißt den ersten Statorpaketaufnahmering und den zweiten Statorpaketaufnahmering, abgegrenzten Hohlraum, welcher vom restlichen Gehäusevolumen abgegrenzt ist, wird das Kühlmittel in dem Hohlraum gestaut. Anschließend wird das Kühlmittel radial durch den Kanaleingang, welcher zentrisch in der Mitte des Statorblechpakets angeordnet ist, zu dem Kühlkanal des Statorblechpakets der elektrischen Maschine gefördert. Danach wird das Kühlmittel durch den Kühlkanal in axiale Richtung umgelenkt und axial ausgehend von der Mitte des Statorblechpakets durch den Kühlkanal gefördert, wodurch sich ein Kühlmittelstrom nicht über eine gesamte Länge des Statorblechpakets erwärmt, sondern nur über die kürzere Strecke, die sich durch die T-Form ergibt.

Eine Ausführungsform der Erfindung sieht vor, dass der Außenbereich als Einlasskanal mit einem Kühlmitteleinlass ausgebildet ist, wobei der Einlasskanal das Gehäuse radial außen umgibt. Da die Zulaufbohrung den Außenbereich des Gehäuses der elektrischen Maschine und den Hohlraum fluidisch koppelt, ist der Einlasskanal über die Zulaufbohrung mit dem Hohlraum fluidisch gekoppelt. Mit anderen Worten überdeckt der Einlasskanal die Zulaufbohrung. Durch diese Ausführungsform kann das Kühlmittel tangential entlang des Einlasskanals der elektrischen Maschine gefördert und anschließend radial durch die mindestens eine Zulaufbohrung umgelenkt werden. Dadurch ergibt sich der Vorteil, dass ein durch den Einlasskanal gefördertes Fluid gleichmäßig über den Umfang des Gehäuses im Einlasskanal verteilt werden kann.

Eine weitere Ausführungsform der Erfindung sieht vor, dass an der Stirnseite des Statorblechpakets eine Statorbleche des Statorblechpakets fixierende Druckplatte angeordnet ist. Die Druckplatte kann dabei ferner eine Austrittsbohrung aufweisen, über welche der Kühlkanal des Statorblechpakets mit dem Wickelkopfraum fluidisch gekoppelt ist. Mit anderen Worten kann die Austrittsbohrung der Druckplatte als zweiter Durchgangskanal ausgebildet sein, welcher ausgehend von dem Kühlkanal in den Wickelkopfraum der elektrischen Maschine mündet. Durch diese Anordnung kann das durch den Kühlkanal axial geförderte Kühlmittel zu der Austrittsbohrung der Druckplatte gefördert werden. Über die Austrittsbohrung kann das Kühlmittel in den Wickelkopfraum der elektrischen Maschine gelangen. Durch das direkte Durchströmen des Kühlmittels durch das Statorblechpaket kann die Verlustwärme der wärmeerzeugenden Bauteile des Stators effektiv abgeführt und der Stator besonders effektiv gekühlt werden.

In einer weiteren Ausführungsform kann zwischen dem Gehäuse und dem Wicklungsüberhang des Statorblechpakets eine Strömungsbarriere an dem Gehäuse oder an dem Wicklungsüberhang angeordnet sein, welche in den Wickelkopfraum der elektrischen Maschine hineinragt. Mit "an dem Gehäuse" ist hier eine Innenseite oder Innenfläche des Gehäuses der elektrischen Maschine gemeint. Die Strömungsbarriere stellt somit eine Absperrung oder Abgrenzung für das vom Statorblechpaket oder Kühlkanal kommende Kühlmittel im Wickelkopfraum dar. Vorzugsweise kann die Strömungsbarriere aus Kunststoff und/oder Metall gebildet sein. Als Kunststoff kann insbesondere ein glasfaserverstärkter Kunststoff (kurz GFK) verwendet werden. Durch die Strömungsbarrieren kann das Kühlmittel gezwungen werden, durch die Zwischenräume des Wicklungsüberhangs zu strömen.

In vorteilhafter Weise umfasst die elektrische Maschine ferner einen Auslasskanal mit einem Kühlmittelauslass, wobei der Auslasskanal das Gehäuse radial umgibt. Der Auslasskanal kann beispielsweise an einem axialen Ende des Gehäuses außen am Gehäuse angeordnet sein. Das Gehäuse weist ferner eine Ablaufbohrung auf, welche den Wickelkopfraum und den Auslasskanal fluidisch koppelt. Mit anderen Worten kann die Ablaufbohrung als dritter Durchgangskanal ausgebildet sein, welcher ausgehend vom Wickelkopfraum in den Auslasskanal mündet. Der Auslasskanal kann also die Ablaufbohrung überdecken. Ferner kann der Auslasskanal das Gehäuse der elektrischen Maschine radial außen umgeben. In vorteilhafter Weise können über den Umfang des Gehäuses verteilt mehrere Ablaufbohrungen radial in einem vorbestimmten Abstand in Umfangsrichtung des Gehäuses zueinander angeordnet sein. Die Ablaufbohrung kann ferner an einem axialen Rand des Gehäuses der elektrischen Maschine angeordnet sein.

Das durch die Austrittsbohrung der Druckplatte kommende Kühlmittel kann nun mittels der Strömungsbarriere durch die Zwischenräume des Wicklungsüberhangs des Statorblechpakets hin zu der Ablaufbohrung des Gehäuses gefördert werden. Anschließend kann das Kühlmittel tangential entlang des Auslasskanals hin zu einem Kühlmittelauslass gefördert werden. Durch die einfache Anordnung der Kanäle, d.h. der Ablaufbohrung, des Auslasskanals und des Kühlmittelauslasses, ergibt sich eine einfache Ableitung des Kühlmittels aus der elektrischen Maschine.

Als Kühlmittel kann beispielsweise eine Flüssigkeit, insbesondere ein Transformatorenöl, oder ein gasförmiges Fluid, insbesondere Luft, eingesetzt werden.

Damit das Kühlmittel in einem geschlossenen Kreislauf durch die elektrische Maschine gefördert werden kann, kann ein externes Pumpenaggregat bereitgestellt werden. Mittels des Pumpenaggregats kann das Kühlmittel durch die elektrische Maschine zu einem Wärmeübertrager gefördert werden, in welchem die aufgenommene Verlustwärme der elektrischen Maschine an eine Umgebung der elektrischen Maschine oder ein Arbeitsfluid abgegeben werden kann.

Die zuvor im Zusammenhang mit der erfindungsgemäßen elektrischen Maschine beschriebenen Vorteile und Weiterbildungen können auf das erfindungsgemäße Verfahren übertragen werden.

Im Folgenden sind Ausführungsbeispiele der Erfindung beschrieben. Es zeigen:
- FIG 1: eine schematische Darstellung eines Querschnitts einer Ausführungsform der erfindungsgemäßen elektrischen Maschine;
- FIG 2: eine schematische Schnittdarstellung einer weiteren Ausführungsform der erfindungsgemäßen elektrischen Maschine; und
- FIG 3: eine schematische Darstellung einer Ausführungsform des Kühlkanals des Statorblechpakets der erfindungsgemäßen elektrischen Maschine.

Bei den im Folgenden erläuterten Ausführungsbeispielen handelt es sich um bevorzugte Ausführungsformen der Erfindung. Bei den Ausführungsbeispielen stellen aber die beschriebenen Komponenten der Ausführungsform jeweils einzelne, unabhängig voneinander betrachtende Merkmale dar, welche die Erfindung jeweils auch unabhängig voneinander weiterbilden und damit auch einzeln oder in einer als der gezeigten Kombination als Bestandteil der Erfindung anzusehen sind. Des Weiteren sind die beschriebenen Ausführungsformen auch durch weitere der bereits beschriebenen Merkmale der Erfindung ergänzbar.

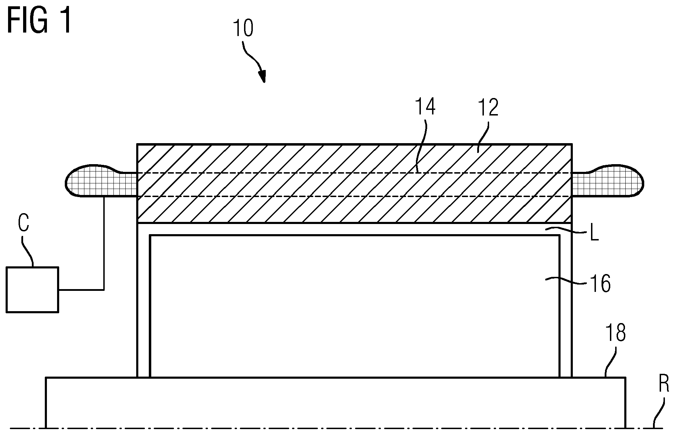

In FIG 1 ist ein allgemeiner Aufbau einer elektrischen Maschine 10 dargestellt. Gezeigt ist eine elektrische Maschine 10, bei der es sich um die erfindungsgemäße elektrische Maschine 10 handeln kann. Die elektrische Maschine 10 kann eine Permanentmagnetsynchronmaschine oder eine Elektrosynchronmaschine oder eine Reluktanzmaschine sein. In FIG 1 stellt eine Rotationsachse R auch eine Symmetrieachse der Darstellung dar. Die elektrische Maschine 10 umfasst einen Stator 12, in welchem Statorwicklungen 14 elektrischer Spulen angeordnet sind, wobei in FIG 1 nur eine der Statorwicklungen 14 dargestellt ist. Die Statorwicklungen 14 werden durch eine Drehstromquelle C abwechselnd bestromt, wodurch im Inneren des Stators 12 ein magnetisches Drehfeld in einem Luftspalt L der elektrischen Maschine 10 entsteht. Die Drehstromquelle C kann beispielsweise ein gesteuerter Wechselrichter oder ein fest frequentes öffentliches elektrisches Versorgungsnetz oder ein Frequenzumrichter sein. Im Inneren des Stators 12 befindet sich ein Rotor 16, der drehfest mit einer Welle 18 verbunden ist. Die Welle 18 ist um die Rotationsachse R drehbar in dem Stator 12 gelagert.

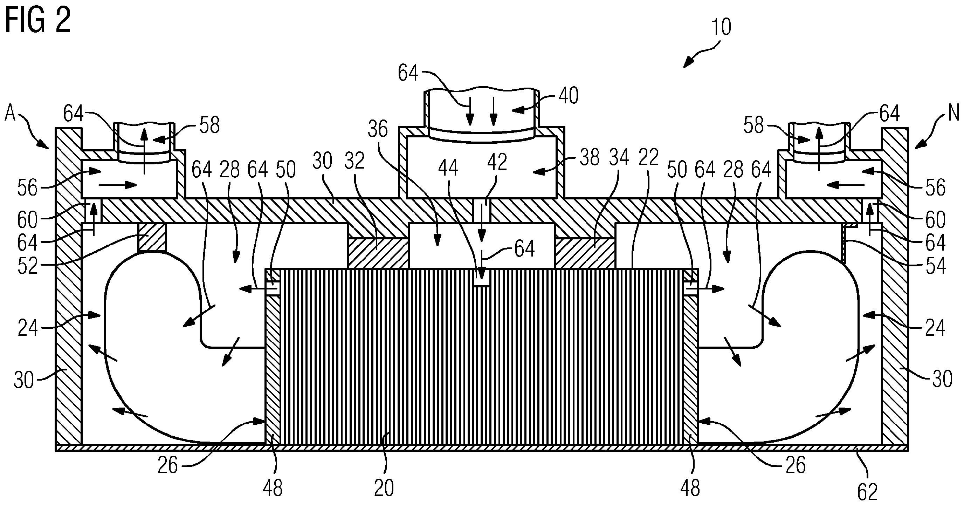

In FIG 2 ist die elektrische Maschine 10 genauer dargestellt. Bei der elektrischen Maschine 10 kann es sich beispielsweise um einen Motor oder Generator handeln. Die elektrische Maschine 10 weist unter anderem ein Statorblechpaket 20 mit einer Statorblechpaketoberfläche 22 auf. Das Statorblechpaket 20 weist eine Statorwicklung 14 mit jeweils einem Wicklungsüberhang 24 an einer Stirnseite 26 des Statorblechpakets 20 auf der Antriebsseite A und einer der Antriebsseite A axial gegenüberliegenden Nicht-Antriebsseite N auf. Mit Stirnseite 26 ist hier ein axialer Rand beziehungsweise eine axiale Randfläche des Statorblechpakets 20 gemeint, welche sich senkrecht zur Haupterstreckungsrichtung der elektrischen Maschine erstreckt. Das Statorblechpaket 20 weist zwei Stirnseiten 26, d.h. eine erste Randfläche und eine der ersten Randfläche axial gegenüberliegende zweite Randfläche, auf. Der Wicklungsüberhang 24 auf der Antriebsseite A und der Nicht-Antriebsseite N ragt dabei in einen jeweiligen Wickelkopfraum 28 hinein. Das Statorblechpaket 20 ist auf der Antriebsseite A und der Nicht-Antriebsseite N durch eine Statorbleche des Statorblechpakets 20 fixierende Druckplatte 48 fixiert. Das Statorblechpaket 20 kann ferner Statorbleche aufweisen, welche sich gegenseitig fixieren, sodass keine Druckplatten 48 an den jeweiligen Stirnseiten 26 des Statorblechpakets 20 erforderlich sind. Das Statorblechpaket 20 und der Wicklungsüberhang 24 sind ferner von einem Gehäuse 30 umgeben. Zwischen dem Gehäuse 30 und dem Statorblechpaket 20 beziehungsweise der Statorblechpaketoberfläche 22 sind ein erster Statorpaketaufnahmering 32 und ein zweiter Statorpaketaufnahmering 34 an der Statorblechpaketoberfläche 22 angeordnet. Der erste 32 und der zweite Statorpaketaufnahmering 34 sind dabei in einem vorbestimmten Abstand axial zueinander angeordnet und umgeben das Statorblechpaket 20 an der Statorblechpaketoberfläche 22 radial. Mit anderen Worten sind die Statorpaketaufnahmeringe 32, 34 ringförmig ausgebildet und liegen auf der Statorblechpaketoberfläche 22 auf. Durch den ersten 32 und den zweiten Statorpaketaufnahmering 34 ist zwischen den beiden Statorpaketaufnahmeringen 32, 34, dem Gehäuse 30 und der Statorblechpaketoberfläche 22 ein Hohlraum 36 gebildet. Mit anderen Worten wird durch die beidseitig angebrachten Statorpaketaufnahmeringe 32, 34 an der Statorblechpaketoberfläche 22 der Hohlraum 36 vom restlichen Gehäusevolumen abgetrennt.

Wie FIG 2 zu entnehmen ist, weist das Gehäuse 30 ferner mindestens eine Zulaufbohrung 42 zwischen dem ersten 32 und dem zweiten Statorpaketaufnahmering 34 auf. Die Zulaufbohrung 42 koppelt dabei einen Außenbereich des Gehäuses 30 der elektrischen Maschine 10 mit dem Hohlraum 36 fluidisch. Mit anderen Worten bildet die Zulaufbohrung 42 einen ersten Durchgangskanal durch das Gehäuse 30. Die Zulaufbohrung 42 verbindet einen Außenbereich des Gehäuses der elektrischen Maschine 10 mit dem Hohlraum. Dieser Außenbereich ist gemäß FIG 2 als Einlasskanal 38 ausgebildet. Der Einlasskanal 38 umgibt das Gehäuse 30 radial außen. Mit anderen Worten erstreckt sich der Einlasskanal 38 entlang der Gehäuseoberfläche radial um das Gehäuse 30 und überdeckt dabei die Zulaufbohrung 42, welche den Einlasskanal 38 fluidisch mit dem Hohlraum 36 koppelt. Mit anderen Worten ist der Einlasskanal 38 als ein ringförmiger Verteilkanal ausgebildet. Der Einlasskanal 38 umfasst ferner einen Kühlmitteleinlass 40. Der Kühlmitteleinlass 40 ist dabei als Rohr ausgebildet.

Das Statorblechpaket 20 weist fernen einen Kanal, welcher insbesondere als Kühlkanal (in FIG 2 nicht dargestellt) ausgebildet ist, auf. Der Kühlkanal ist dabei über einen Kanaleingang 44 fluidisch mit dem Hohlraum 36 gekoppelt. Der Hohlraum 36 bildet sozusagen einen Übergangsbereich von der Zulaufbohrung 42 zu dem Kanaleingang 44 beziehungsweise zum Kühlkanal. In vorteilhafter Weise können mehrere Kühlkanäle im Statorblechpaket 20 vorgesehen sein.

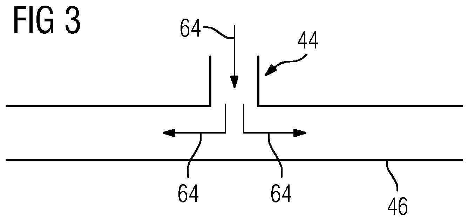

In FIG 3 ist eine Ausführungsform des Kühlkanals 46 mit einem Kühlkanaleingang 44, wie er auch in FIG 2 angewendet werden kann, dargestellt. Somit verläuft der Kühlkanal 46 ausgehend von dem Kanaleingang 44 axial zur Antriebsseite A und Nicht-Antriebsseite N der elektrischen Maschine 10. Der Kühlkanal 46 weist in Verbindung mit dem Kanaleingang 44 eine T-Form auf. Somit ist der Kanaleingang 44 zentrisch bezogen auf die Haupterstreckungsrichtung des Statorblechpakets 20, d.h. in der Mitte, des Statorblechpakets 20 angeordnet. Der Kühlkanal 46 kann auch eine andere Form aufweisen. Beispielsweise kann der Kühlkanal 46 eine mäanderförmige Form aufweisen. Der Kühlkanal 46 geht sowohl auf der Antriebsseite A als auch auf der Nicht-Antriebsseite N in eine Austrittsbohrung 50 über. Diese Austrittsbohrung 50 ist durch einen zweiten Durchgangskanal durch die die Statorbleche des Statorblechpakets 20 fixierenden Druckplatten 48 auf der Antriebsseite A und der Nicht-Antriebsseite N gebildet. Wie bereits oben erläutert kann das Statorblechpaket 20 auch sich gegenseitig fixierende Statorbleche umfassen, sodass keine Druckplatten an den Stirnseiten 26 notwendig sind. Weist das Statorblechpaket 20 keine Druckplatten auf, so mündet der Kühlkanal 46 direkt in den Wickelkopfraum 28. Das Statorblechpaket 20 kann ferner mehrere Kühlkanäle mit jeweiligen Kanaleingängen aufweisen.

Die Austrittsbohrung 50 mündet in den jeweiligen Wickelkopfraum 28 auf der Antriebsseite A und der Nicht-Antriebsseite N. Zwischen dem Gehäuse 30, also der Innenseite des Gehäuses 30, und dem Wicklungsüberhang 24 ist auf der Antriebsseite A eine erste Strömungsbarriere 52 und auf der Nicht-Antriebsseite N eine zweite Strömungsbarriere 54 angeordnet. Beide Strömungsbarrieren 52, 54 ragen in den Wickelkopfraum 28 hinein. Die Strömungsbarrieren 52, 54 können an dem Wicklungsüberhang 24 und/oder an der Innenseite des Gehäuses 30 fixiert sein. Die erste Strömungsbarriere 52 weist, gemäß Fig. 2, einen quadratischen Querschnitt auf. Die zweite Strömungsbarriere 54 hingegen weist einen schmalen, rechteckigen Querschnitt auf. Ferner kann die zweite Strömungsbarriere 54 eine Winkelform im Querschnitt aufweisen. Dabei ist ein Schenkel des Winkels, d.h. der zweiten Strömungsbarriere 54, an der Innenseite des Gehäuses 30 befestigt und der zweite Schenkel des Winkels ragt in den Wickelkopfraum 28 hinein und reicht bis zum Wicklungsüberhang 24 beziehungsweise bis zu einer Oberfläche des Wicklungsüberhangs 24. Die erste 52 und die zweite Strömungsbarriere 54 können identisch ausgebildet sein, d.h. die erste 52 und die zweite Strömungsbarriere 54 können im Querschnitt eine quadratische Form oder eine Winkel-Form aufweisen. Auch andere geometrische Querschnittsformen können denkbar sein. Die erste 52 und die zweite Strömungsbarriere 54 können jeweils, wie aus Fig. 2 hervor geht, auch eine unterschiedliche Form aufweisen. Die erste 52 und die zweite Strömungsbarriere 54 können sich über die Breite des Wicklungsüberhangs 24 erstrecken. Mit anderen Worten können sich die Strömungsbarrieren 52, 54 zwischen dem Wicklungsüberhang 24 und dem Gehäuse 30 in Umfangsrichtung des Gehäuses 30 erstrecken.

Auf der Antriebsseite A und der Nicht-Antriebsseite N der elektrischen Maschine 10 ist jeweils eine Ablaufbohrung 60 vorgesehen. Die Ablaufbohrung 60 durchdringt das Gehäuse 30 und koppelt den jeweiligen Wickelkopfraum 28 auf der Antriebsseite A und der Nicht-Antriebsseite N fluidisch mit einem Auslasskanal 56. Auch der Auslasskanal 56 umgibt, wie bereits auch der Einlasskanal 38, das Gehäuse 30 radial außen. Somit überdeckt der Auslasskanal 56 die jeweilige Ablaufbohrung 60. Der Auslasskanal 56 weist ferner einen Kühlmittelauslass 58 auf, welcher als Rohr ausgebildet sein kann. Die elektrische Maschine 10 umfasst ferner unterhalb des Statorblechpakets 20 ein Spaltrohr 62, welches mit dem Gehäuse 30 verbunden ist und somit das Statorblechpaket 20 mit dem Wicklungsüberhang 24 einschließt. Das Spaltrohr 62 bildet eine Grenze zwischen dem Stator 12 und dem Rotor 16, das in einem Luftspalt zwischen dem Rotor 16 und dem Stator 12 eingebaut ist. Durch das Spaltrohr 62 ist das Gehäusevolumen, in dem sich der Stator 12 befindet, hermetisch von dem Gehäusevolumen, in dem sich der Rotor 16 befindet, abgetrennt.

Durch den entsprechenden Aufbau beziehungsweise Anordnung der Maschinenkomponenten kann ein Verfahren zum Kühlen der elektrischen Maschine 10 umgesetzt werden, auf welches im Folgenden genauer eingegangen wird. Die Strömungspfeile 64 sollen dabei den Strömungsverlauf des Kühlmittels durch die elektrische Maschine 10 verdeutlichen. Ausgehend von dem Kühlmitteleinlass 40, durch welchen das Kühlmittel zunächst radial in den Einlasskanal 38 geleitet wird, wird das Kühlmittel durch den Einlasskanal 38 umgelenkt und tangential entlang des Einlasskanals 38 gefördert. Durch den Einlasskanal 38 wird das Kühlmittel radial um die Gehäusefläche, d.h. über den Gehäuseumfang, verteilt.

Anschließend wird das Kühlmittel radial durch die mindestens eine Zulaufbohrung 42 gefördert. Beim Durchströmen des Kühlmittels durch die Zulaufbohrung 42 gelangt das Kühlmittel von dem Einlasskanal 38 in den Hohlraum 36, welcher vom restlichen Gehäusevolumen abgegrenzt ist. In dem Hohlraum 36 staut sich das Kühlmittel und wird anschließend radial über den Kanaleingang 44 in den Kühlkanal 46 im Statorblechpaket 20 gefördert. Durch den Kühlkanal 46 wird das Kühlmittel in axiale Richtung umgelenkt und axial durch den Kühlkanal 46 hin zu einer Austrittsbohrung 50 auf der Antriebsseite A und der Nicht-Antriebsseite N der elektrischen Maschine 10 geleitet. Somit wird der durch den Kanaleingang 44 in den Kühlkanal 46 geleitete Kühlmittelstrom aufgeteilt, wobei ein Teil des Kühlmittelstroms zur Nicht-Antriebsseite N und der andere Teil des Kühlmittelstroms zu einer Antriebsseite A der elektrischen Maschine 10 geleitet wird. In Abhängigkeit davon welche Form der Kühlkanal aufweist wird das Kühlmittel beispielsweise axial oder mäanderförmig durch das Statorblechpaket 20 von dem Kanaleingang 44 hin zur Antriebsseite A und zur Nicht-Antriebsseite N geleitet. Weist das Statorblechpaket 20 an seinen Stirnseiten 26 keine Druckplatten 48 auf, so wird das Kühlmittel direkt in den Wickelkopfraum 28 geleitet. Das durch das Statorblechpaket 20 geleitete Kühlmittel nimmt die vorhandene Verlustwärme, zum Beispiel Kupferverluste oder Eisenverluste der elektrischen Maschine 10, auf. Durch die Aufteilung des Kühlmittelstroms wird nicht nur ein Kühlmittelstrom beispielsweise von der Nicht-Antriebsseite N zu der Antriebsseite A der elektrischen Maschine 10 geleitet sondern ausgehend von einer Mitte des Statorblechpakets 20 zu der Antriebsseite A und der Nicht-Antriebsseite N geleitet. Dadurch kann deutlich mehr Wärme abgeführt werden, da sich der Kühlmittelstrom nicht über die gesamte Länge des Statorblechpakets 20 erwärmt. Dabei wäre der Kühlmittelstrom auf der Nicht-Antriebsseite N deutlich wärmer als auf der Antriebsseite A und könnte im Strömungsverlauf von der Nicht-Antriebsseite N zur Antriebsseite A immer weniger Verlustwärme aufnehmen. Durch eine kürzere Strecke, welche sich durch die T-Form des Kühlkanals 46 mit dem Kanaleingang 44 ergibt, kann das Kühlmittel mehr Wärmeverluste aufnehmen.

Danach verlässt das Kühlmittel das Statorblechpaket 20 beziehungsweise den Kühlkanal 46 über die jeweilige Austrittsbohrung 50 der Druckplatten 48 zu den Wickelkopfräumen 28 beziehungsweise Wicklungsüberhängen 24 der Antriebsseite A, sowie der Nicht-Antriebsseite N. Durch die am Gehäuse 30 oder dem Wicklungsüberhang 24 befestigten Strömungsbarrieren 52, 54 wird das Kühlmittel gezwungen durch die Zwischenräume des Wicklungsüberhangs 24 zu strömen. Nachdem das Kühlmittel die Abwärme des Wicklungsüberhangs 24 aufgenommen hat, verlässt das Kühlmittel den jeweiligen Wickelkopfraum 28 über beidseitig angebrachte radial angeordnete Ablaufbohrungen 60 im Gehäuse 30. Anschließend wird das Kühlmittel tangential entlang des Auslasskanals 56 hin zu dem Kühlmittelauslass 58 gefördert.

Insgesamt geht somit ein Kühlkonzept flüssigkeitsdurchströmter Statoren mit einer Spaltrohrabdichtung hervor. Das Statorgehäuse wird mittels eines Rohrs, einem sogenannten Spaltrohr, in der Statorpaketbohrung abgedichtet. Derzeit wird das gekapselte Statorgehäuse mittels statischer Ölfüllung oder mittels Unterdruck indiziertem Ölumlauf gekühlt. Nach dem neuen Kühlkonzept strömt das Kühlmittel über radial angeordnete Bohrungen mittig in das Statorgehäuse. Dieser Eintrittsbereich ist durch die beidseitig angebrachten Statorpaketaufnahmeringe vom restlichen Gehäusevolumen abgetrennt. Somit wird das Kühlmittel durch ebenfalls radial angeordneten Zugangsöffnungen dem Statorpaket zugeführt. Das nun durch das Statorblechpaket geleitete Kühlmittel, nimmt die vorhandene Verlustwärme (Kupferverluste, Eisenverluste) auf. Danach verlässt das Kühlmittel das Statorblechpaket über die Druckplatten zu den Wickelköpfen der Antriebsseite, sowie der Nicht-Antriebsseite. Durch am Gehäuse befestigte Barrieren, sogenannte Strömungsbarrieren, wird das Kühlmittel gezwungen, durch die Wickelkopfzwischenräume zu strömen. Nachdem es die Abwärme der Wickelköpfe aufgenommen hat, verlässt das Kühlmittel die Wickelkopfräume über beidseitig angebrachte radial angeordnete Bohrungen im Gehäuse. Bei Statorpaketen von Maschinen größerer Baugröße, ist das Verhältnis von elektrisch und elektromagnetisch aktivem Material (Verlustwärme erzeugendes Material) zur Paketoberfläche sehr groß. Aus diesem Grund ist es schwierig, die Verlustwärme effektiv von der Oberfläche der Pakete abzuleiten. Mit dem Kühlkonzept, können im Statorblechpaket liegende Kühlkanäle ohne großen Fertigungsaufwand mit dem Kühlmittel gespeist werden. In diesen im Paketinneren befindlichen Kanälen kann das Medium effektiv die Verlustwärme aufnehmen. Anschließend strömt es an beiden Statorblechpaketenden aus dem Statorblechpaket durch die Wickelköpfe und nimmt die Verlustwärme der Wickelköpfe auf. Mit diesem Kühlkonzept ist es möglich, alle wärmeerzeugenden Bauteile des Stators effektiv durch direktes Durch- beziehungsweise Umströmen zu kühlen.

Derartige elektrische Maschinen werden bei Mühlen, insbesondere bei Vertikalmühlen verwendet. Die Einsatzgebiete sind dabei unter anderem Zerkleinerung von Kalkstein, Schlacke, Klinker, Kalk, Gips und Erzen in der Baustoffindustrie als auch von Kohle in der Kohleaufbereitung.

## Patentansprüche

1. Elektrische Maschine (10) umfassend:
- ein Statorblechpaket (20) mit einer Statorblechpaketoberfläche (22), wobei
- das Statorblechpaket (20) eine Statorwicklung (14) mit einem Wicklungsüberhang (24) aufweist, welcher an einer Stirnseite (26) des Statorblechpakets (20) in einen Wickelkopfraum (28) hineinragt,
- ein Gehäuse (30), welches das Statorblechpaket (20) und den Wicklungsüberhang (24) umgibt, wobei
- zwischen dem Gehäuse (30) und dem Statorblechpaket (20) ein erster (32) und ein zweiter Statorpaketaufnahmering (34), welche in einem vorbestimmten Abstand axial zueinander angeordnet sind und das Statorblechpaket (20) radial umgeben, an der Statorblechpaketoberfläche (22) angeordnet sind, wobei zwischen dem Gehäuse (30), der Statorblechpaketoberfläche (22), dem ersten (32) und dem zweiten Statorpaketaufnahmering (34) ein Hohlraum (36) gebildet ist, wobei
- das Gehäuse (30) mindestens eine Zulaufbohrung (42) zwischen dem ersten (32) und dem zweiten Statorpaketaufnahmering (34) aufweist, wobei die Zulaufbohrung (42) einen Außenbereich des Gehäuses (30) und den Hohlraum (36) fluidisch koppelt,
**dadurch gekennzeichnet, dass**
- das Statorblechpaket (20) einen Kühlkanal (46) aufweist, welcher über einen Kanaleingang (44) fluidisch mit dem Hohlraum (36) gekoppelt ist, wobei
- der Kanaleingang (44) zentrisch in der Mitte des Statorblechpakets (20) angeordnet ist, sodass sich eine T-Form des Kühlkanals (46) in Verbindung mit dem Kanaleingang (44) ergibt, wodurch sich ein Kühlmittelstrom nicht über eine gesamte Länge des Statorblechpakets (20) erwärmt, sondern nur über die kürzere Strecke, die sich durch die T-Form ergibt.

2. Elektrische Maschine (10) nach Anspruch 1, **dadurch gekennzeichnet, dass** der Außenbereich als Einlasskanal (38) mit einem Kühlmitteleinlass (40) ausgebildet ist, wobei der Einlasskanal (38) das Gehäuse (30) radial außen umgibt.

3. Elektrische Maschine (10) nach Anspruch 1 oder 2, **da- durch gekennzeichnet**, dass an der Stirnseite (26) des Statorblechpakets (20) eine Statorbleche des Statorblechpakets (20) fixierende Druckplatte (48) angeordnet ist, wobei die Druckplatte (48) eine Austrittsbohrung (50) aufweist, über welche der Kühlkanal (46) des Statorblechpakets (20) mit dem Wickelkopfraum (28) fluidisch gekoppelt ist.

4. Elektrische Maschine (10)nach einem der vorhergehenden Ansprüche, **dadurch gekennzeichnet, dass** zwischen dem Gehäuse (30) und dem Wicklungsüberhang (24) des Statorblechpakets (20) eine Strömungsbarriere (52,54) an dem Gehäuse (30) oder an dem Wicklungsüberhang (24) angeordnet ist, welche in den Wickelkopfraum (28) der elektrischen Maschine (30) hineinragt.

5. Elektrische Maschine (10) nach Anspruch 4, **dadurch gekennzeichnet, dass** die Strömungsbarriere (52,54) aus Kunststoff gebildet ist.

6. Elektrische Maschine (10) nach einem der vorhergehenden Ansprüche, **dadurch gekennzeichnet, dass** die elektrische Maschine (10) ferner umfasst:
- einen Auslasskanal (56) mit einem Kühlmittelauslass (58), wobei der Auslasskanal (56) das Gehäuse (30) radial umgibt, wobei
- das Gehäuse (30) eine Ablaufbohrung (60) aufweist, welche den Wickelkopfraum (28) und den Auslasskanal (56) fluidisch koppelt.

7. Verfahren zum Kühlen einer elektrischen Maschine (10) nach einem der vorhergehenden Ansprüche mit den Schritten:
- Radiales Fördern des Kühlmittels durch die mindestens eine Zulaufbohrung (42) des Gehäuses (30),
**gekennzeichnet durch**,
- Stauen des Kühlmittels in dem Hohlraum (36) **durch** den mindestens den ersten (32) und den zweiten Statorpaketaufnahmering (34),
- Radiales Fördern des Kühlmittels **durch** den Kanaleingang, welcher zentrisch in der Mitte des Statorblechpakets (20) angeordnet ist, zu dem Kühlkanal (46) des Statorblechpakets (20) der elektrischen Maschine (10);
- Umlenken des Kühlmittels **durch** den Kühlkanal (46) in axiale Richtung und
- axiales Fördern des Kühlmittels ausgehend von der Mitte des Statorblechpakets (20) **durch** den Kühlkanal (46), wodurch sich ein Kühlmittelstrom nicht über eine gesamte Länge des Statorblechpakets (20) erwärmt, sondern nur über die kürzere Strecke, die sich **durch** die T-Form ergibt.

8. Verfahren nach Anspruch 7, **dadurch gekennzeichnet, dass** das Kühlmittel axial durch den Kühlkanal (46) hin zu der Austrittsbohrung (50) der Druckplatte (48) des Statorblechpakets (20) gefördert wird.

9. Verfahren nach einem der Ansprüche 7 oder 8, **dadurch gekennzeichnet, dass**
- die elektrische Maschine eine Strömungsbarriere (52,54) gemäß Anspruch 4 und einen Auslasskanal (56) und eine Ablaufbohrung (60) gemäß Anspruch 6 aufweist, wobei
- das Kühlmittel mittels der Strömungsbarriere (52,54) durch den Wicklungsüberhang (24) des Statorblechpakets (20) hin zu der Ablaufbohrung (60) des Gehäuses (30) und tangential entlang des Auslasskanals (56) hin zu dem Kühlmittelauslass (58) gefördert wird.

10. Vertikalmühle mit zumindest einer elektrischen Maschine (10) nach einem der Ansprüche 1 bis 6.

## Claims

1. Electrical machine (10) comprising:
- a stator laminated core (20) with a stator laminated core surface (22), wherein
- the stator laminated core (20) has a stator winding (14) with a winding overhang (24), which projects into a winding head space (28) on a face (26) of the stator laminated core (20),
- a housing (30), which surrounds the stator laminated core (20) and the winding overhang (24), wherein
- a first (32) and a second stator core support ring (34) are arranged on the stator laminated core surface (22) between the housing (30) and the stator laminated core (20), which are arranged axially at a prescribed distance from each other and radially surround the stator laminated core (20), wherein a cavity (36) is formed between the housing (30), the stator laminated core surface (22) and the first (32) and second stator core support ring (34), wherein
- the housing (30) has at least one inlet bore (42) between the first (32) and the second stator core support ring (34), wherein the inlet bore (42) fluidically couples an external area of the housing (30) and the cavity (36),
**characterised in that**
- the stator laminated core (20) has a cooling channel (46), which is fluidically coupled with the cavity (36) via a channel entry (44), wherein
- the channel entry (44) is arranged centrally in the middle of the stator laminated core (20), creating a T-shaped form of the cooling channel (46) in conjunction with the channel entry (44), by means of which a stream of coolant is not heated over the entire length of the stator laminated core (20), but only over the shorter stretch which is created by the T-shaped form.

2. Electrical machine (10) according to claim 1, **characterised in that** the external area is embodied as an inlet channel (38) with a coolant inlet (40), wherein the inlet channel (38) surrounds the housing (30) externally in a radial manner.

3. Electrical machine (10) according to claim 1 or 2, **characterised in that** a pressure plate (48) which fixes stator plates of the stator laminated core (20) in place is arranged on the face (26) of the stator laminated core (20), wherein the pressure plate (48) has an exit bore (50), via which the cooling channel (46) of the stator laminated core (20) is fluidically coupled with the winding head space (28).

4. Electrical machine (10) according to one of the preceding claims, **characterised in that** a flow barrier (52,54) is arranged on the housing (30) or on the winding overhang (24), between the housing (30) and the winding overhang (24) of the stator laminated core (20), which projects into the winding head space (28) of the electrical machine (30).

5. Electrical machine (10) according to claim 4, **characterised in that** the flow barrier (52,54) is formed of plastic.

6. Electrical machine (10) according to one of the preceding claims, **characterised in that** the electrical machine (10) further comprises:
- an outlet channel (56) with a coolant outlet (58), wherein the outlet channel (56) surrounds the housing (30) in a radial manner, wherein
- the housing (30) has a drainage hole (60), which fluidically couples the winding head space (28) and the outlet channel (56).

7. Method for cooling an electrical machine (10) according to one of the preceding claims, with the steps:
- radial conveyance of the coolant through the at least one inlet bore (42) of the housing (30),
**characterised by**
- backing-up of the coolant in the cavity (36) through the at least first (32) and the second stator core support ring (34),
- radial conveyance of the coolant through the channel entry, which is arranged centrally in the middle of the stator laminated core (20), to the channel (46) of the stator laminated core (20) of the electrical machine (10);
- diversion of the coolant through the cooling channel (46) in the axial direction and
- axial conveyance of the coolant starting from the middle of the stator laminated core (20) through the cooling channel (46), by means of which a stream of coolant does not heat up over the entire length of the stator laminated core (20), but only over the shorter stretch which is created by the T-shaped form.

8. Method according to claim 7, **characterised in that** the coolant is conveyed axially through the cooling channel (46) as far as the exit bore (50) of the pressure plate (48) of the stator laminated core (20).

9. Method according to one of claims 7 or 8, **characterised in that**
- the electrical machine has a flow barrier (52,54) according to claim 4 and an outlet channel (56) and a drainage hole (60) according to claim 6, wherein
- the coolant is conveyed by means of the flow barrier (52,54) through the winding overhang (24) of the stator laminated core (20) as far as the drainage hole (60) of the housing (30) and tangentially along the outlet channel (56) as far as the coolant outlet (58).

10. Vertical mill with at least one electrical machine (10) according to one of claims 1 to 6.

## Revendications

1. Machine (10) électrique, comprenant :
- un paquet (20) de tôles statoriques, ayant une surface (22) de paquet de tôles statoriques, dans laquelle
- le paquet (20) de tôles statoriques a un enroulement (14) de stator ayant une partie (24) en porte à faux d'enroulement, qui, sur une côté (26) frontal du paquet (20) de tôles statoriques, pénètre dans un espace (28) de tête de bobine,
- une carcasse (30), qui entoure le paquet (20) de tôles statoriques et la partie (24) en porte à faux d'enroulement, dans laquelle
- entre la carcasse (30) et le paquet (20) de tôles statoriques sont disposés à la surface (22) du paquet de tôles statoriques, un premier (32) et un deuxième anneaux (34) de réception du paquet de tôles statoriques, qui sont disposés à une distance définie à l'avance axialement l'un de l'autre et entourent radialement le paquet (20) de tôles statoriques, dans laquelle, entre la carcasse (30), la surface (22) du paquet de tôles statoriques, le premier (32) et le deuxième anneau (34) de réception du paquet de tôles statoriques est formé un espace (36) vide, dans laquelle
- la carcasse (30) a au moins un trou (42) d'afflux entre le premier (32) et le deuxième anneau (34) de réception du paquet de tôles statoriques, le trou (42) d'afflux mettant en communication fluidiquement la partie à l'extérieur de la carcasse (30) et l'espace (36) vide,
**caractérisée en ce que**
- le paquet (20) de tôles statoriques a un conduit (46) de refroidissement, qui est en communication fluidique avec l'espace (36) vide par une entrée (44) de conduit, dans laquelle
- l'entrée (44) de conduit est disposée de manière centrée au milieu du paquet (20) de tôles statoriques, de manière à obtenir une forme en T du conduit (46) de refroidissement, en liaison avec l'entrée (44) du conduit, grâce à quoi un courant de fluide de refroidissement n'est pas réchauffé sur toute la longueur du paquet (20) de tôles statoriques, mais seulement sur la section la plus courte, qui est obtenue par la forme en T.

2. Machine (10) électrique suivant la revendication 1, **caractérisée en ce que** la partie extérieure est constituée sous la forme d'un conduit (38) d'entrée ayant une entrée (40) pour du fluide de refroidissement, le conduit (38) d'entrée entourant, à l'extérieur radialement, la carcasse (30).

3. Machine (10) électrique suivant la revendication 1 ou 2, **caractérisée en ce que**, du côté (26) frontal du paquet (20) de tôles statoriques, est disposée une plaque (48) de poussée immobilisant des tôles statoriques du paquet (20) de tôles statoriques, la plaque (48) de poussée ayant un trou (50) de sortie par lequel le conduit (46) de refroidissement du paquet (20) de tôles statoriques est en communication fluidique avec l'espace (28) de tête de bobine.

4. Machine (10) électrique suivant l'une des revendications précédentes, **caractérisée en ce qu'**entre la carcasse (30) et la partie (24) en porte à faux d'enroulement du paquet (20) de tôles statoriques, est montée, sur la carcasse (30) ou sur la partie (24) en porte à faux d'enroulement, une barrière (52, 54) à l'écoulement, qui pénètre dans l'espace (28) de tête de bobine de la machine (30) électrique.

5. Machine (10) électrique suivant la revendication 4, **caractérisée en ce que** la barrière (52, 54) à l'écoulement est en matière plastique.

6. Machine (10) électrique suivant l'une des revendications précédentes, **caractérisée en ce que** la machine (10) électrique comprend, en outre :
- un conduit (56) de sortie, ayant une sortie (58) de fluide de refroidissement, le conduit (56) de sortie entourant radialement la carcasse (30), dans laquelle
- la carcasse (30) a un trou (60) d'évacuation, qui met l'espace (28) de tête de bobine en communication fluidique avec le conduit (56) de sortie.

7. Procédé de refroidissement d'une machine (10) électrique suivant l'une des revendications précédentes, comprenant les stades :
- transport radial du fluide de refroidissement dans le au moins un trou (42) d'afflux de la carcasse (30),
**caractérisé par**
- l'accumulation du fluide de refroidissement dans l'espace (36) vide par au moins le premier (32) et le deuxième anneaux (34) de réception du paquet de tôles statoriques,
- le transport radial du fluide de refroidissement par l'entrée du conduit, qui est disposée de manière centrée au milieu du paquet (20) de tôles statoriques vers le conduit (46) de refroidissement du paquet (20) de tôles statoriques de la machine (10) électrique;
- la déviation du fluide de refroidissement par le conduit (46) de refroidissement dans la direction axiale et
- le transport axial du fluide de refroidissement à partir du milieu du paquet (20) de tôles statoriques par le conduit (46) de refroidissement, un courant de fluide de refroidissement n'étant ainsi pas réchauffé sur toute la longueur du paquet (20) de tôles statoriques, mais seulement sur la section la plus courte, qui est obtenue par la forme en T.

8. Procédé suivant la revendication 7, **caractérisé en ce que** l'on transporte le fluide de refroidissement axialement dans le conduit (46) de refroidissement vers le trou (50) de sortie de la plaque (48) de poussée du paquet (20) de tôles statoriques.

9. Procédé suivant l'une des revendications 7 ou 8, **caractérisée en ce que**
- la machine électrique a une barrière (52, 54) à l'écoulement suivant la revendication 4 et un conduit (56) de sortie et un trou (60) d'évacuation suivant la revendication 6, dans lequel
- on transporte le fluide de refroidissement au moyen de la barrière (52, 54) à l'écoulement dans la partie (24) en porte à faux d'enroulement du paquet (20) de tôles statoriques vers le trou (60) d'évacuation de la carcasse (30) et, tangentiellement, le long du conduit (56) de sortie vers la sortie (58) du fluide de refroidissement.

10. Broyeur vertical ayant au moins une machine (10) électrique suivant l'une des revendications 1 à 6.
